# EUROPEAN PATENT SPECIFICATION

(11) **EP 2 057 826 B1**
(45) Date of publication and mention of the grant of the patent: **20.08.2014**
(21) Application number: 07705655.4
(22) Date of filing: 27.02.2007
(51) Int. Cl.: H04M 1/2745

(54) **SYSTEM AND METHOD FOR COORDINATING AUDIOVISUAL CONTENT WITH CONTACT LIST INFORMATION**
SYSTEM UND VERFAHREN ZUR ZUORDNUNG EINES AUDIOVISUELLEN INHALTS MIT INFORMATION EINER KONTAKTLISTE
SYSTÈME ET PROCÉDÉ POUR COORDONNER UN CONTENU AUDIOVISUEL AVEC DES INFORMATIONS D'UNE LISTE DE CONTACTS

(30) Priority: 28.08.2006 US 823698 P; 01.09.2006 US 469610
(43) Date of publication of application: 13.05.2009
(73) Proprietor: Sony Mobile Communications AB, 221 88 Lund (SE)
(72) Inventor: GRÖHN, Björn, SE-225 91 Lund (SE); HANSSON, Magnus, Waterloo, Ontario N2V 2W1 (CA)
(74) Representative: Aurell, Henrik
(86) International application number: PCT/IB2007/000471
(87) International publication number: WO 2008/026024

(56) References cited:
- EP-A- 1 677 497
- GB-A- 2 409 365
- GB-A- 2 425 441
- US-A1- 2004 207 722
- US-A1- 2005 010 568
- US-A1- 2005 192 808
- US-B1- 6 931 263

## Description

### TECHNICAL FIELD OF THE INVENTION

The present invention relates generally to managing data in an electronic device such as a mobile telephone and, more particularly, to a system and method for coordinating audiovisual content with contact list information.

### DESCRIPTION OF THE RELATED ART

Mobile and/or wireless electronic devices are becoming increasingly popular. For example, mobile telephones, portable media players and portable gaming devices are now in wide-spread use. In addition, the features associated with certain types of electronic devices have become increasingly diverse. To name a few examples, many electronic devices have cameras, text messaging capability, Internet browsing capability, electronic mail capability, video playback capability, audio playback capability, image display capability and handsfree headset interfaces.

Most mobile electronic devices that are capable of establishing a telephone call include a contact list function that stores the names of individuals and associated information, such as telephone numbers and/or addresses. The collection of contacts and associated information is entered and stored in text format. While it is convenient to search and sort text-based information, many users have difficultly associating what a person looks like with a written name. For instance, the user of an electronic device may recognize the appearance of a person, but not his or her name. An exemplary situation when this may be troublesome is during receipt of an incoming call and the user cannot remember the caller from the display of the caller's name and/or telephone number by a caller ID function. In other situations, the user may recognize a name, but cannot recall that person's appearance.

This difficulty in associating "names" and "faces" may become exacerbated when the user meets multiple people in a relatively short amount of time. In addition, as time goes by, people may have difficulty remembering persons or places that are preserved in photographs.

US 2005/192808 A1 discloses a method of identifying an image file using a voice recognition system in a camera-equipped mobile communication device. The method includes capturing an image in an image file with the digital; adding a voice tag to the image file; storing the image file and voice tag; activating retrieval of the image by speaking the associated voice tag; processing the voice tag input by a voice recognition mechanism; searching stored images for the input voice tag and displaying the image associated with the input voice tag.

### SUMMARY

To improve a user's ability to effectively use stored contact information, there is a need in the art for an enhanced system and method for coordinating audiovisual content with contact list information, including mechanisms to match an audio message relating to a photograph with stored contact list information.

According to one aspect of the invention, a method of coordinating audiovisual content with contact list information includes recording an audio message and storing the audio message in relationship with the audiovisual content; matching the audio message with a contact list entry from a plurality of contact list entries; and associating the audiovisual content with the matched contact list entry.

According to an embodiment of the method, the audiovisual content includes a photograph and the method further includes displaying the photograph with or instead of a display of the contact list entry.

According to an embodiment of the method, the audiovisual content includes a photograph and the contact list is maintained by a mobile radio terminal capable of receiving calls, and the method further includes displaying the photograph when a call is received from a telephone number that forms part of the associated contact list entry.

According to an embodiment of the method, the audiovisual content is a photograph.

According to an embodiment of the method, the contact list is maintained by a mobile radio terminal and the photograph is taken with a camera of the mobile radio terminal.

According to an embodiment of the method, the contact list is maintained by a mobile radio terminal and the photograph is transferred to the mobile radio terminal.

According to an embodiment, the method further includes conducting speech recognition on the audio message to generate criteria from the audio message for use in the matching the audio message to the contact list entry.

According to an embodiment of the method, the speech recognition converts the audio message to text.

According to an embodiment of the method, text from a field of the contact list entry is used in the matching of the audio message to the contact list entry.

According to an embodiment of the method, another recorded audio message that is associated with the contact list entry is used in the matching of the audio message to the contact list entry.

According to another aspect of the invention, a program that coordinates audiovisual content with contact list information is embodied on a machine readable medium of an electronic device and includes executable logic to record an audio message and store the audio message in relationship with the audiovisual content; match the audio message with a contact list entry from a plurality of contact list entries; and associate the audiovisual content with the matched contact list entry.

According to an embodiment of the program, the audiovisual content includes a photograph and the program further includes logic to display the photograph with or instead of a display of the contact list entry.

According to an embodiment of the program, the audiovisual content includes a photograph and the contact list is maintained by a mobile radio terminal capable of receiving calls, and the program further includes logic to display the photograph when a call is received from a telephone number that forms part of the associated contact list entry.

According to an embodiment of the program, speech recognition is conducted on the audio message to generate criteria from the audio message for use in matching the audio message to the contact list entry.

According to an embodiment of the program, the speech recognition converts the audio message to text.

According to another aspect of the invention, a mobile radio terminal includes a radio circuit for establishing calls; and a control circuit arranged to carry out logical operations to coordinate audiovisual content with contact list information including means for recording an audio message and storing the audio message in relationship with the audiovisual content; means for matching the audio message with a contact list entry from a plurality of contact list entries; and means for associat the audiovisual content with the matched contact list entry.

According to an embodiment of the mobile radio terminal, the audiovisual content includes a photograph and the control circuit controls a display to display the photograph with or instead of a display of the contact list entry.

According to an embodiment of the mobile radio terminal, the audiovisual content includes a photograph and the control circuit controls a display to display the photograph when a call is received from a telephone number that forms part of the associated contact list entry.

According to an embodiment of the mobile radio terminal, speech recognition is conducted on the audio message to generate criteria from the audio message for use in matching the audio message to the contact list entry.

According to an embodiment of the mobile radio terminal, the audio message is transmitted to a server that carries out the speech recognition.

According to an embodiment of the mobile radio terminal, the speech recognition converts the audio message to text.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

FIG. 1 is a schematic view of a mobile telephone as an exemplary electronic equipment in accordance with an embodiment of the present invention;
FIG. 2 is a schematic block diagram of the relevant portions of the mobile telephone of FIG. 1 in accordance with an embodiment of the present invention;
FIG. 3 is a schematic diagram of a communications system in which the mobile telephone of FIG. 1 may operate;
FIG. 4 is a flow chart representing an exemplary method of coordinating audiovisual content with contact list information using the mobile telephone of FIG. 1;
FIG. 5 is a flow chart representing another exemplary method of coordinating audiovisual content with contact list information using the mobile telephone of FIG. 1; and
FIG. 6 is a flow chart representing still another exemplary method of coordinating audiovisual content with contact list information using the mobile telephone of FIG. 1.

### DETAILED DESCRIPTION OF EMBODIMENTS

The present invention will now be described with reference to the drawings, wherein like reference numerals are used to refer to like elements throughout. It will be understood that the figures are not necessarily to scale.

The interchangeable terms "electronic equipment" and "electronic device" include portable radio communication equipment. The term "portable radio communication equipment," which herein after is referred to as a "mobile radio terminal," includes all equipment such as mobile telephones, pagers, communicators, electronic organizers, personal digital assistants (PDAs), smartphones, portable communication apparatus or the like.

In the present application, the invention is described primarily in the context of a mobile telephone. However, it will be appreciated that the invention is not intended to be limited to a mobile telephone and can be any type of appropriate electronic equipment, examples of which include a media player, a gaming device and a computer.

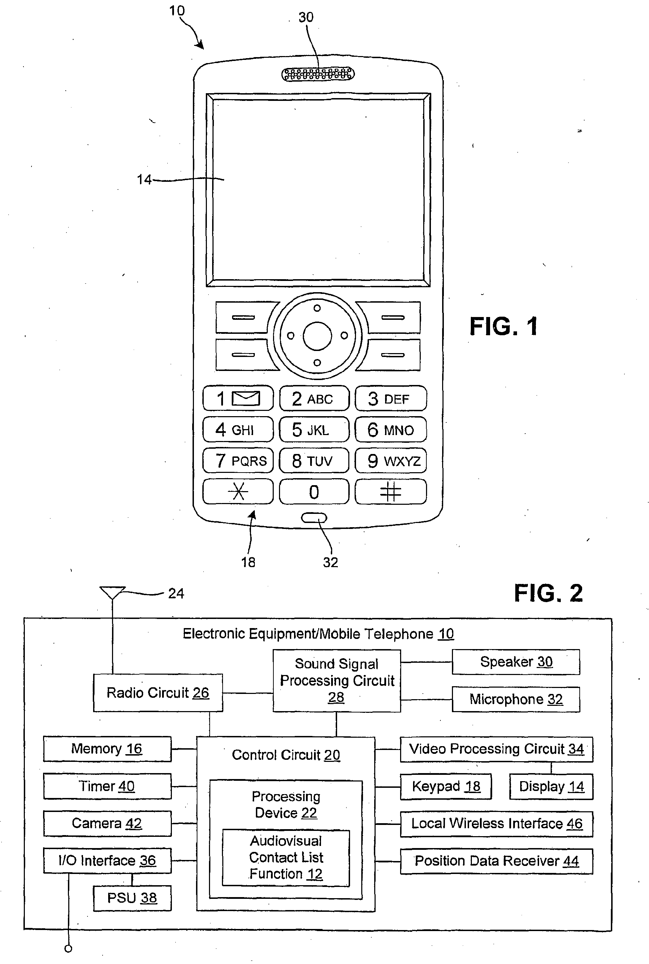

Referring initially to FIGs. 1 and 2, an electronic device 10 is shown. The electronic device 10 includes an audiovisual contact list function 12 that is configured to coordinate audiovisual content with contact list information. Additional details and operation of the audiovisual contact list function 12 will be described in greater detail below. The audiovisual contact list function 12 may be embodied as executable code that is resident in and executed by the electronic device 10. In one embodiment, the audiovisual contact list function 12 may be a program stored on a computer or machine readable medium. The audiovisual contact list function 12 may be a stand-alone software application or form a part of a software application that carries out additional tasks related to the electronic device 10.

The electronic device of the illustrated embodiment is a mobile telephone and will be referred to as the mobile telephone 10. The mobile telephone 10 is shown as having a "brick" or "block" form factor housing, but it will be appreciated that other type housings, such as a clamshell housing or a slide-type housing, may be utilized.

The mobile telephone 10 may include a display 14. The display 14 displays information to a user such as operating state, time, telephone numbers, contact information, various navigational menus, etc., which enable the user to utilize the various features of the mobile telephone 10. The display 14 also may be used to visually display content received by the mobile telephone 10 and/or retrieved from a memory 16 of the mobile telephone 10. The display 14 may be used to present images, video and other graphics to the user, such as photographs, mobile television content and video associated with games.

A keypad 18 provides for a variety of user input operations. For example, the keypad 18 typically includes alphanumeric keys for allowing entry of alphanumeric information such as telephone numbers, phone lists, contact information, notes, etc. In addition, the keypad 18 typically includes special function keys such as a "call send" key for initiating or answering a call, and a "call end" key for ending or "hanging up" a call. Special function keys may also include menu navigation and select keys, for example, for navigating through a menu displayed on the display 16 to select different telephone functions, profiles, settings, etc., as is conventional. Special function keys may include audiovisual content playback keys to start, stop and pause playback, skip or repeat tracks, and so forth. Other keys associated with the mobile telephone may include a volume key, an audio mute key, an on/off power key, a web browser launch key, a camera key, etc. Keys or key-like functionality may also be embodied as a touch screen associated with the display 14.

The mobile telephone 10 includes call circuitry that enables the mobile telephone 10 to establish a call and/or exchange signals with a called/calling device, typically another mobile telephone or landline telephone. However, the called/calling device need not be another telephone, but may be some other device such as an Internet web server, content providing server, etc. Calls may take any suitable form. For example, the call could be a conventional call that is established over a cellular circuit-switched network or a voice over Internet Protocol (VoIP) call that is established over a packet-switched capability of a cellular network or over an alternative packet-switched network, such as WiFi, WiMax, etc. Another example includes a video enabled call that is established over a cellular or alternative network.

The mobile telephone 10 may be configured to transmit, receive and/or process data, such as text messages (e.g., colloquially referred to by some as "an SMS"), electronic mail messages, multimedia messages (e.g., colloquially referred to by some as "an MMS"), image files, video files, audio files, ring tones, streaming audio, streaming video, data feeds (including podcasts) and so forth. Processing such data may include storing the data in the memory 16, executing applications to allow user interaction with data, displaying video and/or image content associated with the data, outputting audio sounds associated with the data and so forth.

FIG. 2 represents a functional block diagram of the mobile telephone 10. For the sake of brevity, generally conventional features of the mobile telephone 10 will not be described in great detail herein. The mobile telephone 10 includes a primary control circuit 20 that is configured to carry out overall control of the functions and operations of the mobile telephone 10. The control circuit 20 may include a processing device 22, such as a CPU, microcontroller or microprocessor. The processing device 22 executes code stored in a memory (not shown) within the control circuit 20 and/or in a separate memory, such as memory 16, in order to carry out operation of the mobile telephone 10. The memory 16 may be, for example, one or more of a buffer, a flash memory, a hard drive, a removable media, a volatile memory, a non-volatile memory or other suitable device.

In addition, the processing device 22 may execute code that implements the audiovisual contact list function 12. It will be apparent to a person having ordinary skill in the art of computer programming, and specifically in application programming for mobile telephones or other electronic devices, how to program a mobile telephone 10 to operate and carry out logical functions associated with the audiovisual contact list function 12. Accordingly, details as to specific programming code have been left out for the sake of brevity. Also, while the audiovisual contact list function 12 is executed by the processing device 22 in accordance with a preferred embodiment of the invention, such functionality could also be carried out via dedicated hardware, firmware, software, or combinations thereof, without departing from the scope of the invention.

Continuing to refer to FIGs. 1 and 2, the mobile telephone 10 includes an antenna 24 coupled to a radio circuit 26. The radio circuit 26 includes a radio frequency transmitter and receiver for transmitting and receiving signals via the antenna 24 as is conventional. The radio circuit 26 may be configured to operate in a mobile communications system and may be used to send and receive data and/or audiovisual content. Receiver types for interaction with a mobile radio network and/or broadcasting network include, but are not limited to, GSM, CDMA, WCDMA, GPRS, MBMS, WiFi, WiMax, DVB-H, ISDB-T, etc as well as advanced versions of these standards.

The mobile telephone 10 further includes a sound signal processing circuit 28 for processing audio signals transmitted by and received from the radio circuit 26. Coupled to the sound processing circuit 28 are a speaker 30 and a microphone 32 that enable a user to listen and speak via the mobile telephone 10 as is conventional. The radio circuit 26 and sound processing circuit 28 are each coupled to the control circuit 20 so as to carry out overall operation. Audio data may be passed from the control circuit 20 to the sound signal processing circuit 28 for playback to the user. The audio data may include, for example, audio data from an audio file stored by the memory 18 and retrieved by the control circuit 20, or received audio data such as in the form of streaming audio data from a mobile radio service. The sound processing circuit 28 may include any appropriate buffers, decoders, amplifiers and so forth.

The display 14 may be coupled to the control circuit 20 by a video processing circuit 34 that converts video data to a video signal used to drive the display 14. The video processing circuit 34 may include any appropriate buffers, decoders, video data processors and so forth. The video data may be generated by the control circuit 20, retrieved from a video file that is stored in the memory 16, derived from an incoming video data stream received by the radio circuit 28 or obtained by any other suitable method.

The mobile telephone 10 further includes one or more I/O interface(s) 36. The I/O interface(s) 36 may be in the form of typical mobile telephone I/O interfaces and may include one or more electrical connectors. As is typical, the I/O interface(s) 36 may be used to couple the mobile telephone 10 to a battery charger to charge a battery of a power supply unit (PSU) 38 within the mobile telephone 10. In addition, or in the alternative, the I/O interface(s) 36 may serve to connect the mobile telephone 10 to a headset assembly (e.g., a personal handsfree (PHF) device) that has a wired interface with the mobile telephone 10. Further, the I/O interface(s) 36 may serve to connect the mobile telephone 10 to a personal computer or other device via a data cable for the exchange of data. The mobile telephone 10 may receive operating power via the I/O interface(s) 36 when connected to a vehicle power adapter or an electricity outlet power adapter.

The mobile telephone 10 may also include a timer 40 for carrying out timing functions. Such functions may include timing the durations of calls, generating the content of time and date stamps, etc. The mobile telephone 10 may include a camera 42 for taking digital pictures and/or movies. Image and/or video files corresponding to the pictures and/or movies may be stored in the memory 16. The mobile telephone 10 also may include a position data receiver 44, such as a global positioning system (GPS) receiver, Galileo satellite system receiver or the like.

The mobile telephone 10 also may include a local wireless interface 46, such as an infrared transceiver and/or an RF adaptor (e.g., a Bluetooth adapter), for establishing communication with an accessory, another mobile radio terminal, a computer or another device. For example, the local wireless interface 46 may operatively couple the mobile telephone 10 to a headset assembly (e.g., a PHF device) in an embodiment where the headset assembly has a corresponding wireless interface.

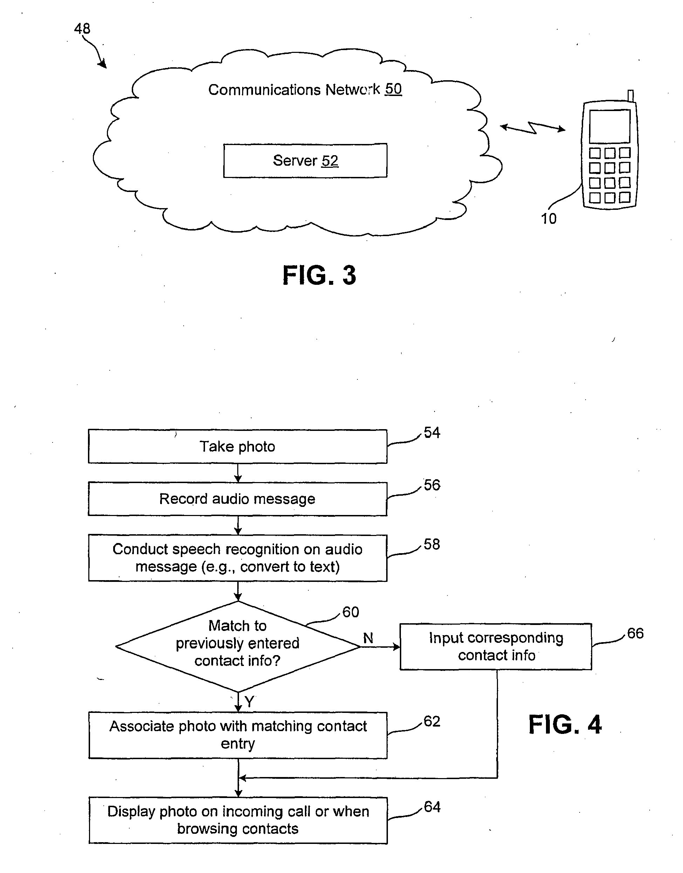

With additional reference to FIG. 3, the mobile telephone 10 may be configured to operate as part of a communications system 48. The system 48 may include a communications network 50 having a server 52 (or servers) for managing calls placed by and destined to the mobile telephone 10, transmitting data to the mobile telephone 10 and carrying out any other support functions. The server 52 communicates with the mobile telephone 10 via a transmission medium. The transmission medium may be any appropriate device or assembly, including, for example, a communications tower (e.g., a cell tower), another mobile telephone, a wireless access point, a satellite, etc. Portions of the network may include wireless transmission pathways. The network 50 may support the communications activity of multiple mobile telephones 10 and other types of end user devices. As will be appreciated, the server 52 may be configured as a typical computer system used to carry out server functions and may include a processor configured to execute software containing logical instructions that embody the functions of the server 52.

With additional reference to FIG. 4, illustrated are logical operations to implement an exemplary method of coordinating audiovisual content with contact list information. The exemplary method may be carried out by executing an embodiment of the audiovisual contact list function 12, for example. Thus, the flow chart of FIG. 4 may be thought of as depicting steps of a method carried out by the mobile telephone 10. Although FIG. 4 shows a specific order of executing functional logic blocks, the order of execution of the blocks may be changed relative to the order shown. Also, two or more blocks shown in succession may be executed concurrently or with partial concurrence. Certain blocks also may be omitted. In addition, any number of commands, state variables, semaphores or messages may be added to the logical flow for purposes of enhanced utility, accounting, performance, measurement, troubleshooting, and the like. It is understood that all such variations are within the scope of the present invention.

The logical flow for the audiovisual contact list function 12 may begin in block 54 where the user carries out actions to take a photograph with the camera 42. The photograph may be stored by the memory 16 in any suitable file format, such as JPEG. In most cases, it is believed that the photograph will be of a person, but the photograph could include multiple people or the photograph could be of an object or landscape. In other embodiments, the photograph may be downloaded or transferred to the mobile telephone 10 instead of being generated by the camera 42. This embodiment may have particular application in situations where the mobile telephone 10 does not have a built-in camera.

Proceeding to block 56, the user may record an audio message using the mobile telephone 10. For instance, the audiovisual contact list function 12 may prompt the user to speak into the microphone 32 or the microphone of an operatively interfaced headset (not shown). In one embodiment and when the photograph of block 54 is of a person, the user may have the subject of the photograph input the audio message.

The audio message may be captured and stored by the memory 16 in any suitable file format. In most cases, it is believed that the audio message will relate to the subject matter of the photograph that was taken in block 54. For instance, if the photograph is of a person, the audio message may be the name of the person. As another example, if the photograph is of a commercial establishment (e.g., a store or building), the audio message may be the name or address of the corresponding location.

Thereafter, in block 58, the audio message is run through a speech recognition software engine. For instance, the speech recognition engine may convert the audio message to text using a speech-to-text conversion process. Alternatively, the speech recognition engine may attempt to recognize patterns in the audio message to identify a meaningful term (or terms) from the audio message by matching the audio signals to a function or value. While speech recognition software is undergoing continuous improvement, suitable speech recognition engines will be known to those of ordinary skill in the art. The speech recognition engine may form a part of the audiovisual contact list function 12 or may be implemented in a separate program that is executed by the mobile telephone 10. Since speech recognition processing may consume a considerable amount of processing capacity, the speech recognition engine may be resident in and executed by the server 52. In this embodiment, the audio message may be transmitted to the server 52 for processing and the results of the speech recognition may be returned to the mobile telephone 10.

Proceeding to block 60, the audiovisual contact list function 12 may determine if there is a match between the output of the speech recognition from block 58 and existing contact information. As will be understood, contact information may be stored in a contact list database. Such databases typically store the names of people, along with their address (e.g., home address and/or work address), telephone numbers and electronic mail addresses. Other information may be stored, such as notes and important dates (e.g., birthdays and anniversaries). The contact list database may be stored using the memory 16 and accessed using a contact list interface software application executed by the processing device 22.

In the embodiment where the audio message was converted to text, the text may be compared against the entries in the user's contact list for a matching string of characters. The search for a matching entry or entries may attempt to match text in one or more particular fields in the contact list database or all fields in the contact list database. Also, the engine used to identify matches may use variant spellings for the converted text and/or pronunciation-based search algorithms to match the text to contact list data.

In the embodiment where the audio message was converted to a meaningful term (e.g., a value, a sound signal profile, etc.), the term may be compared against commensurate types of terms derived from the data contained in the contact list database. For instance, text-based data that is entered into a contact list may be converted to a term by running a conversion algorithm.

If a match is identified in block 60, the logical flow may proceed to block 62 where the photograph taken in block 54 is associated with the contact list entry that matches the converted audio message. Thereafter, in block 64, the photograph may be displayed on the display 14 at times that may provide the user with a visual cue for the information from the associated contact list entry. This may assist the user recall the identity of a person corresponding to the associated contact list entry or a location corresponding to the associated contact list entry in a variety of circumstances. For example, if the user were to browse his or her contact list entries, the photograph may be displayed when the associated contact list entry is highlighted from a list of entries, or is selected for viewing or dialing. In another situation, if the mobile telephone 10 were to receive a call from a telephone number matching the contact list entry associated with the photograph, the photograph may be displayed to assist the user identify the caller. In addition to or instead of displaying the photograph in these and/or similar circumstances, the audio message may be audibly played back to the user.

If a match is not identified in block 60, the logical flow may proceed to block 66 where the user may be prompted to enter contact information that corresponds to the photograph and/or the audio message. In this manner, a content list entry may be generated and associated with the photograph. Alternatively, the user may be prompted to manually identify an existing contact list entry for association with the photograph. Thereafter, the logical flow may proceed to block 64 (described above) so that the photograph may be displayed in connection with activity relating to the associated contact list entry.

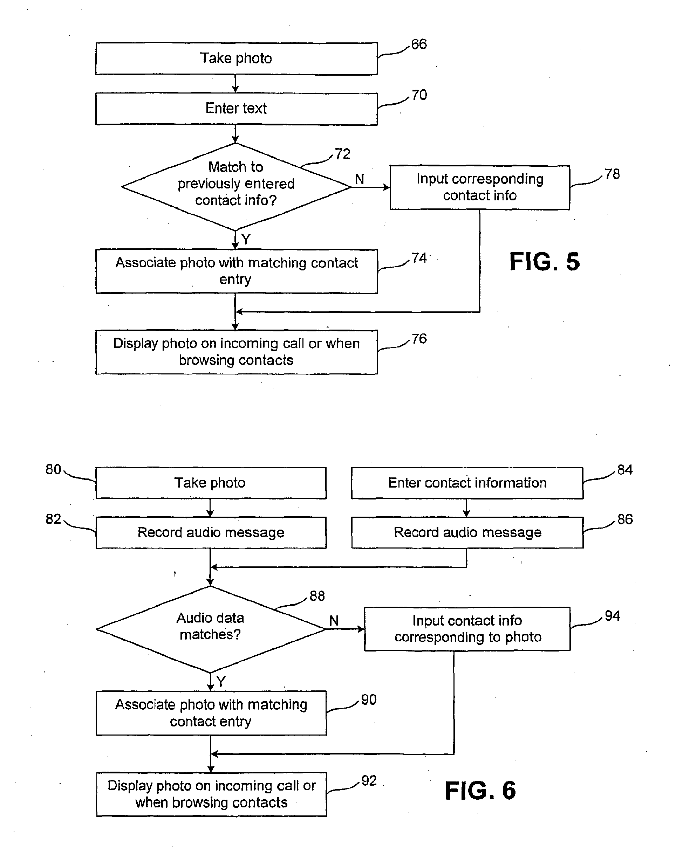

With additional reference to FIG. 5, illustrated are logical operations to implement another exemplary method of coordinating audiovisual content with contact list information. The exemplary method may be carried out by executing an embodiment of the audiovisual contact list function 12, for example. Thus, the flow chart of FIG. 5 may be thought of as depicting steps of a method carried out by the mobile telephone 10. Although FIG. 5 shows a specific order of executing functional logic blocks, the order of execution of the blocks may be changed relative to the order shown. Also, two or more blocks shown in succession may be executed concurrently or with partial concurrence. Certain blocks also may be omitted. In addition, any number of commands, state variables, semaphores or messages may be added to the logical flow for purposes of enhanced utility, accounting, performance, measurement, troubleshooting, and the like. It is understood that all such variations are within the scope of the present invention.

Beginning in block 68 the user may carry out actions to take a photograph with the camera 42. The photograph may be stored by the memory 16 in any suitable file format, such as JPEG. In most cases, it is believed that the photograph will be of a person, but the photograph could include multiple people or the photograph could be of an object or landscape. In other embodiments, the photograph may be downloaded or transferred to the mobile telephone 10 instead of being generated by the camera 42. This embodiment may have particular application in situations where the mobile telephone 10 does not have a built-in camera.

Proceeding to block 70, the user may enter text relating to the photograph. For instance, the audiovisual contact list function 12 may prompt the user to enter text by depressing buttons of the keypad 18. In most cases, it is believed that the entered text will relate to the subject matter of the photograph that was taken in block 68. For instance, if the photograph is of a person, the text may be the name of the person. As another example, if the photograph is of a commercial establishment (e.g., a store or building), the audio message may be the name or address of the corresponding location.

Thereafter, in block 72, the audiovisual contact list function 12 may determine if there is a match between the text entered in block 70 and existing contact information that has been stored in a contact list database. For instance, the text may be compared against the entries in the user's contact list for a matching string of characters. The search for a matching entry or entries may attempt to match text in one or more particular fields in the contact list database or all fields in the contact list database. Also, the engine used to identify matches may use variant spellings for the text and/or pronunciation-based search algorithms to match the text to contact list data.

If a match is identified in block 72, the logical flow may proceed to block 74 where the photograph taken in block 68 is associated with the contact list entry that matches the text entered in block 70. Thereafter, in block 76, the photograph may be displayed on the display 14 at times that may provide the user with a visual cue for the information from the associated contact list entry. This may assist the user recall the identity of a person corresponding to the associated contact list entry or a location corresponding to the associated contact list entry in a variety of circumstances. For example, if the user were to browse his or her contact list entries, the photograph may be displayed when the associated contact list entry is highlighted from a list of entries, or is selected for viewing or dialing. In another situation, if the mobile telephone 10 were to receive a call from a telephone number matching the contact list entry associated with the photograph, the photograph may be displayed to assist the user identify the caller.

If a match is not identified in block 72, the logical flow may proceed to block 78 where the user may be prompted to enter contact information that corresponds to the photograph and/or the text entered in block 70. In this manner, a content list entry may be generated and associated with the photograph. Alternatively, the user may be prompted to manually identify an existing contact list entry for association with the photograph. Thereafter, the logical flow may proceed to block 76 (described above) so that the photograph may be displayed in connection with activity relating to the associated contact list entry.

With additional reference to FIG. 6, illustrated are logical operations to implement still another exemplary method of coordinating audiovisual content with contact list information. The exemplary method may be carried out by executing an embodiment of the audiovisual contact list function 12, for example. Thus, the flow chart of FIG. 6 may be thought of as depicting steps of a method carried out by the mobile telephone 10. Although FIG. 6 shows a specific order of executing functional logic blocks, the order of execution of the blocks may be changed relative to the order shown. Also, two or more blocks shown in succession may be executed concurrently or with partial concurrence. Certain blocks also may be omitted. In addition, any number of commands, state variables, semaphores or messages may be added to the logical flow for purposes of enhanced utility, accounting, performance, measurement, troubleshooting, and the like. It is understood that all such variations are within the scope of the present invention.

In block 80, the user may carry out actions to take a photograph with the camera 42. The photograph may be stored by the memory 16 in any suitable file format, such as JPEG. In most cases, it is believed that the photograph will be of a person, but the photograph could include multiple people or the photograph could be of an object or landscape. In other embodiments, the photograph may be downloaded or transferred to the mobile telephone 10 instead of being generated by the camera 42. This embodiment may have particular application in situations where the mobile telephone 10 does not have a built-in camera.

Proceeding to block 82, the user may record an audio message using the mobile telephone 10. For instance, the audiovisual contact list function 12 may prompt the user to speak into the microphone 32 or the microphone of an operatively interfaced headset (not shown). In one embodiment and when the photograph of block 80 is of a person, the user may have the subject of the photograph input the audio message.

The audio message may be captured and stored by the memory 16 in any suitable file format. In most cases, it is believed that the audio message will relate to the subject matter of the photograph that was taken in block 82. For instance, if the photograph is of a person, the audio message may be the name of the person. As another example, if the photograph is of a commercial establishment (e.g., a store or building), the audio message may be the name or address of the corresponding location.

At some other time, such as before or after blocks 80 and 82 are carried out, the user may enter contact information a contact list database to establish a contact list entry in block 84. For example, entered may be the name a person, the business and/or residence address of the person, a telephone number or numbers for the person, an electronic mail address or addresses for the person and so forth.

Proceeding to block 86, the user may record a second audio message using the mobile telephone 10. In most cases, it is believed that the second audio message will relate to the contact list entry that was entered in block 84. For instance, the second audio message may be the name of the person for which contact information was entered. It will be appreciated that multiple contact list entries may be entered and an audio message for each contact list entry may be recorded.

In block 88, a comparison may be made between the audio message recorded in conjunction with the photograph of block 82 and each of the audio messages recorded in conjunction with establishment of the contact list entries of block 84. The comparison may be made by directly comparing the recordings or the sound characteristics of the recordings. In other embodiments, each of the recordings may be processed using a speech recognition software engine to convert the recordings to text or meaningful term, and the output of the speech recognition engine may serve as the basis of the comparison.

If the recording of block 82 contains sufficiently similar content to one of the recordings of block 86, the logic may find that a match exists between the two recordings. If a match is identified in block 88, the logical flow may proceed to block 90 where the photograph taken in block 80 is associated with the contact list entry having the audio message that matched the audio message recorded in block 82.

Thereafter, in block 92, the photograph may be displayed on the display 14 at times that may provide the user with a visual cue for the information from the associated contact list entry. This may assist the user recall the identity of a person corresponding to the associated contact list entry or a location corresponding to the associated contact list entry in a variety of circumstances. For example, if the user were to browse his or her contact list entries, the photograph may be displayed when the associated contact list entry is highlighted from a list of entries, or is selected for viewing or dialing. In another situation, if the mobile telephone 10 were to receive a call from a telephone number matching the contact list entry associated with the photograph, the photograph may be displayed to assist the user identify the caller. In addition to or instead of displaying the photograph in these and similar circumstances, the corresponding audio message of either of blocks 82 or 86 may be audibly played back to the user.

If a match is not identified in block 88, the logical flow may proceed to block 94 where the user may be prompted to enter contact information that corresponds to the photograph and/or the audio message of block 82. In this manner, a content list entry may be generated and associated with the photograph. Alternatively, the user may be prompted to manually identify an existing contact list entry for association with the photograph. Thereafter, the logical flow may proceed to block 92 (described above) so that the photograph may be displayed in connection with activity relating to the associated contact list entry.

The foregoing operations depict exemplary manners in which a method of coordinating audiovisual content with contact list information that may be implemented. An example application of the method includes taking a photograph of an individual and recording an audio message containing the name of the individual. Once an association between the photograph and a contract list entry has been made using the content of the audio message to match the photograph with the contact list entry, the photograph may be displayed in conjunction with the contract list entry. This may aid certain users who have difficultly "matching names with faces."

In a variation of the method described above, instead of associating a photograph with a contact list entry, the method may be used to associate other types of audiovisual content with a contact list entry. Other types of audiovisual content that may be associated include, but are not limited to, video clips, ring tones, songs, and so on. Accordingly, the term audiovisual content is used broadly to include photographs, image files, video files, audio files, text, and any other content that may be associated with a contact list entry consistent with the techniques described herein.

Although the invention has been shown and described with respect to certain preferred embodiments, it is understood that equivalents and modifications will occur to others skilled in the art upon the reading and understanding of the specification. The present invention includes all such equivalents and modifications, and is limited only by the scope of the following claims.

## Claims

1. A method of coordinating audiovisual content with contact list information stored by an electronic device (10), comprising:
recording (56) an audio message and storing the audio message in relationship with the audiovisual content;
conducting (58) speech recognition on the audio message to generate criteria from the audio message for use in matching the audio message to a contact list entry;
matching (60) the audio message with a contact list entry from a plurality of contact list entries by searching through the contact list entries for a contact list entry that contains contact list content that matches the criteria from the audio message;
associating (62) the audiovisual content with the matched contact list entry; and
presenting (64) the audiovisual content to a user of the electronic device (10) upon at least one of user selection of the matched contact list entry or receipt of an incoming call from a device associated with the matched contact list entry.

2. The method of claim 1, wherein the audiovisual content includes a photograph and the photograph is displayed instead of a display of the contact list entry upon at least one of user selection of the matched contact list entry or receipt of an incoming call from a device associated with the matched contact list entry.

3. The method of claim 1, wherein the audiovisual content includes a photograph and the contact list is maintained by a mobile radio terminal (10) capable of receiving calls.

4. The method of any of claims 2-3, wherein the contact list is maintained by a mobile radio terminal (10) and the photograph is taken with a camera (42) of the mobile radio terminal.

5. The method of any of claims 2-3, wherein the contact list is maintained by a mobile radio terminal (10) and the photograph is transferred to the mobile radio terminal.

6. The method of claim 1, wherein the speech recognition converts the audio message to text.

7. The method of any of claims 1-6, wherein text from a field of the contact list entry is used in the matching of the audio message to the contact list entry.

8. The method of any of claims 1-7, wherein another recorded audio message that is associated with the contact list entry is used in the matching of the audio message to the contact list entry.

9. A program (12) that coordinates audiovisual content with contact list information and is embodied on a machine readable medium (16) of an electronic device (10), the program comprising executable logic to:
record an audio message and store the audio message in relationship with the audiovisual content;
conduct speech recognition on the audio message to generate criteria from the audio message for use in matching the audio message to a contact list entry;
match the audio message with a contact list entry from a plurality of contact list entries by searching through the contact list entries for a contact list entry that contains contact list content that matches the criteria from the audio message;
associate the audiovisual content with the matched contact list entry; and
present the audiovisual content to a user of the electronic device (10) upon at least one of user selection of the matched contact list entry or receipt of an incoming call from a device associated with the matched contact list entry.

10. The program of claim 9, wherein the audiovisual content includes a photograph and the photograph is displayed instead of a display of the contact list entry upon at least one of user selection of the matched contact list entry or receipt of an incoming call from a device associated with the matched contact list entry.

11. The program of either of claims 9-10, wherein the speech recognition converts the audio message to text.

12. A mobile radio terminal (10), comprising:
a radio circuit (26) for establishing calls; and
a control circuit (20) arranged to carry out logical operations to coordinate audiovisual content with contact list information including:
means for recording an audio message and storing the audio message in relationship with the audiovisual content;
means for conducting speech recognition on the audio message to generate criteria from the audio message for use in matching the audio message to a contact list entry;
means for matching the audio message with a contact list entry from a plurality of contact list entries by searching through the contact list entries for a contact list entry that contains contact list content that matches the criteria from the audio message;
means for associating the audiovisual content with the matched contact list entry; and
means for presenting the audiovisual content to a user of the mobile radio terminal (10) upon at least one of user selection of the matched contact list entry or receipt of an incoming call from a device associated with the matched contact list entry.

13. The mobile radio terminal (10) of claim 12, wherein the audiovisual content includes a photograph and the photograph is displayed instead of a display of the contact list entry upon at least one of user selection of the matched contact list entry or receipt of an incoming call from a device associated with the matched contact list entry.

14. The mobile radio terminal (10) of either of claims 12-13, wherein the speech recognition converts the audio message to text.

## Patentansprüche

1. Verfahren zum Koordinieren von audiovisuellem Inhalt mit Kontaktlisteninformationen, die von einer elektronischen Vorrichtung (10) gespeichert werden, umfassend:
Aufzeichnen (56) einer Audiobotschaft und Speichern der Audiobotschaft in Beziehung zum audiovisuellen Inhalt;
Durchführen (58) der Spracherkennung auf der Audiobotschaft, um Kriterien aus der Audiobotschaft zur Verwendung beim Anpassen der Audiobotschaft an einen Kontaktlisteneintrag zu erzeugen;
Anpassen (60) der Audiobotschaft an einen Kontaktlisteneintrag aus mehreren Kontaktlisteneinträgen, indem in Kontaktlisteneinträgen ein Kontaktlisteneintrag gesucht wird, der Kontaktlisteninhalt enthält, welcher den Kriterien aus der Audiobotschaft entspricht;
Verbinden (62) des audiovisuellen Inhalts mit dem angepassten Kontaktlisteneintrag; und
Wiedergeben (64) des audiovisuellen Inhalts für einen Benutzer der elektronischen Vorrichtung (10), wenn mindestens ein Element aus der Benutzerauswahl des angepassten Kontaktlisteneintrags oder Empfangs eines ankommenden Aufrufs von einer Vorrichtung zum angepassten Kontaktlisteneintrag gehört.

2. Verfahren nach Anspruch 1, wobei der audiovisuelle Inhalt ein Foto umfasst und das Foto statt einer Anzeige des Kontaktlisteneintrags angezeigt wird, wenn mindestens ein Element aus der Benutzerauswahl des angepassten Kontaktlisteneintrags oder Empfangs eines ankommenden Aufrufs von einer Vorrichtung zum angepassten Kontaktlisteneintrag gehört.

3. Verfahren nach Anspruch 1, wobei der audiovisuelle Inhalt ein Foto umfasst und die Kontaktliste durch ein mobiles Funkterminal (10) gewartet wird, das Anrufe empfangen kann.

4. Verfahren nach einem der Ansprüche 2-3, wobei die Kontaktliste durch ein mobiles Funkterminal (10) gewartet wird und das Foto mit einer Kamera (42) des mobilen Funkterminals aufgenommen wird.

5. Verfahren nach einem der Ansprüche 2-3, wobei die Kontaktliste durch ein mobiles Funkterminal (10) gewartet wird und das Foto zum mobilen Funkterminal übertragen wird.

6. Verfahren nach Anspruch 1, wobei die Spracherkennung die Audiobotschaft in Text umwandelt.

7. Verfahren nach einem der Ansprüche 1-6, wobei Text aus einem Feld des Kontaktlisteneintrags beim Anpassen der Audiobotschaft an den Kontaktlisteneintrag verwendet wird.

8. Verfahren nach einem der Ansprüche 1-7, wobei eine weitere aufgezeichnete Audiobotschaft, die zum Kontaktlisteneintrag gehört, beim Anpassen der Audiobotschaft an den Kontaktlisteneintrag verwendet wird.

9. Programm (12), das audiovisuellen Inhalt mit Kontaktlisteninformationen koordiniert und auf einem maschinenlesbaren Medium (16) einer elektronischen Vorrichtung (10) verkörpert ist, wobei das Programm eine ausführbare Logik umfasst, um Folgendes auszuführen:
Aufzeichnen einer Audiobotschaft und Speichern der Audiobotschaft in Beziehung zum audiovisuellen Inhalt;
Durchführen der Spracherkennung auf der Audiobotschaft, um Kriterien aus der Audiobotschaft zur Verwendung beim Anpassen der Audiobotschaft an einen Kontaktlisteneintrag zu erzeugen;
Anpassen der Audiobotschaft an einen Kontaktlisteneintrag aus mehreren Kontaktlisteneinträgen, indem in Kontaktlisteneinträgen ein Kontaktlisteneintrag gesucht wird, der Kontaktlisteninhalt enthält, welcher den Kriterien aus der Audiobotschaft entspricht;
Verbinden des audiovisuellen Inhalts mit dem angepassten Kontaktlisteneintrag; und
Wiedergeben des audiovisuellen Inhalts für einen Benutzer der elektronischen Vorrichtung (10), wenn mindestens ein Element aus der Benutzerauswahl des angepassten Kontaktlisteneintrags oder der Empfang eines ankommenden Aufrufs von einer Vorrichtung zum angepassten Kontaktlisteneintrag gehört.

10. Programm nach Anspruch 9, wobei der audiovisuelle Inhalt ein Foto umfasst und das Foto statt einer Anzeige des Kontaktlisteneintrags angezeigt wird, wenn mindestens ein Element aus der Benutzerauswahl des angepassten Kontaktlisteneintrags oder dem Empfang eines ankommenden Aufrufs von einer Vorrichtung zum angepassten Kontaktlisteneintrag gehört.

11. Programm nach einem der Ansprüche 9-10, wobei die Spracherkennung die Audiobotschaft in Text umwandelt.

12. Mobiles Funkterminal (10), umfassend:
ein Funknetz (26) zum Gesprächsaufbau; und
eine Steuerungslogik (20), die zum Ausführen von logischen Operationen ausgelegt ist, um audiovisuellen Inhalt mit Kontaktlisteninformationen zu koordinieren, umfassend:
Mittel zum Aufzeichnen einer Audiobotschaft und Speichern der Audiobotschaft in Beziehung zum audiovisuellen Inhalt;
Mittel zum Durchführen der Spracherkennung auf der Audiobotschaft, um Kriterien aus der Audiobotschaft zur Verwendung beim Anpassen der Audiobotschaft an einen Kontaktlisteneintrag zu erzeugen;
Mittel zum Anpassen der Audiobotschaft an einen Kontaktlisteneintrag aus mehreren Kontaktlisteneinträgen, indem in Kontaktlisteneinträgen ein Kontaktlisteneintrag gesucht wird, der Kontaktlisteninhalt enthält, welcher den Kriterien aus der Audiobotschaft entspricht;
Mittel zum Verbinden des audiovisuellen Inhalts mit dem angepassten Kontaktlisteneintrag; und
Mittel zum Wiedergeben des audiovisuellen Inhalts für einen Benutzer des mobilen Funkterminals (10), wenn mindestens ein Element aus der Benutzerauswahl des angepassten Kontaktlisteneintrags oder der Empfang eines ankommenden Aufrufs von einer Vorrichtung zum angepassten Kontaktlisteneintrag gehört.

13. Mobiles Funkterminal (10) nach Anspruch 12, wobei der audiovisuelle Inhalt ein Foto umfasst und das Foto statt einer Anzeige des Kontaktlisteneintrags angezeigt wird, wenn mindestens ein Element aus der Benutzerauswahl des angepassten Kontaktlisteneintrags oder der Empfang eines ankommenden Aufrufs von einer Vorrichtung zum angepassten Kontaktlisteneintrag gehört.

14. Mobiles Funkterminal (10) nach einem der Ansprüche 12-13, wobei die Spracherkennung die Audiobotschaft in Text umwandelt.

## Revendications

1. Procédé de coordination d'un contenu audiovisuel avec des informations de liste de contacts mémorisées par un dispositif électronique (10), comprenant :
l'enregistrement (56) d'un message audio et la mémorisation du message audio en relation avec le contenu audiovisuel ;
l'exécution (58) d'une reconnaissance vocale sur le message audio pour générer des critères à partir du message audio pour une utilisation lors d'une mise en correspondance du message audio avec une entrée de liste de contacts ;
la mise en correspondance (60) du message audio avec une entrée de liste de contacts parmi une pluralité d'entrées de liste de contacts en recherchant, dans les entrées de liste de contacts, une entrée de liste de contacts qui contient un contenu de liste de contacts qui correspond aux critères provenant du message audio ;
l'association (62) du contenu audiovisuel à l'entrée de liste de contacts correspondante ; et
la présentation (64) du contenu audiovisuel à un utilisateur du dispositif électronique (10) lors d'au moins l'une d'une sélection d'utilisateur de l'entrée de liste de contacts correspondante ou d'une réception d'un appel entrant provenant d'un dispositif associé à l'entrée de liste de contacts correspondante.

2. Procédé selon la revendication 1, dans lequel le contenu audiovisuel comprend une photographie et la photographie est affichée à la place d'un affichage de l'entrée de liste de contacts lors d'au moins l'une d'une sélection d'utilisateur de l'entrée de liste de contacts correspondante ou d'une réception d'un appel entrant provenant d'un dispositif associé à l'entrée de liste de contacts correspondante.

3. Procédé selon la revendication 1, dans lequel le contenu audiovisuel comprend une photographie et la liste de contacts est conservée par un terminal radio mobile (10) capable de recevoir des appels.

4. Procédé selon l'une quelconque des revendications 2 et 3, dans lequel la liste de contacts est conservée par un terminal radio mobile (10) et la photographie est prise par une caméra (42) du terminal radio mobile.

5. Procédé selon l'une quelconque des revendications 2 et 3, dans lequel la liste de contacts est conservée par un terminal radio mobile (10) et la photographie est transférée au terminal radio mobile.

6. Procédé selon la revendication 1, dans lequel la reconnaissance vocale convertit le message audio en texte.

7. Procédé selon l'une quelconque des revendications 1 à 6, dans lequel un texte provenant d'un champ de l'entrée de liste de contacts est utilisé lors de la mise en correspondance du message audio avec l'entrée de liste de contacts.

8. Procédé selon l'une quelconque des revendications 1 à 7, dans lequel un autre message audio enregistré qui est associé à l'entrée de liste de contacts est utilisé lors de la mise en correspondance du message audio avec l'entrée de liste de contacts.

9. Programme (12) qui coordonne un contenu audiovisuel avec des informations de liste de contacts et qui est mis en oeuvre sur un support pouvant être lu par une machine (16) d'un dispositif électronique (10), le programme comprenant une logique exécutable pour :
enregistrer un message audio et mémoriser le message audio en relation avec le contenu audiovisuel ;
effectuer une reconnaissance vocale sur le message audio pour générer des critères à partir du message audio pour une utilisation lors d'une mise en correspondance du message audio avec une entrée de liste de contacts ;
mettre en correspondance le message audio avec une entrée de liste de contacts parmi une pluralité d'entrées de liste de contacts en recherchant, dans les entrées de liste de contacts, une entrée de liste de contacts qui contient un contenu de liste de contacts qui correspond aux critères provenant du message audio ;
associer le contenu audiovisuel avec l'entrée de liste de contacts correspondante ; et
présenter le contenu audiovisuel à un utilisateur du dispositif électronique (10) lors d'au moins l'une d'une sélection d'utilisateur de l'entrée de liste de contacts correspondante ou d'une réception d'un appel entrant provenant d'un dispositif associé à l'entrée de liste de contacts correspondante.

10. Programme selon la revendication 9, dans lequel le contenu audiovisuel comprend une photographie et la photographie est affichée à la place d'un affichage de l'entrée de liste de contacts lors d'au moins l'une d'une sélection d'utilisateur de l'entrée de liste de contacts correspondante ou d'une réception d'un appel entrant provenant d'un dispositif associé à l'entrée de liste de contacts correspondante.

11. Programme selon l'une ou l'autre des revendications 9 et 10, dans lequel la reconnaissance vocale convertit le message audio en texte.

12. Terminal radio mobile (10), comprenant :
un circuit radio (26) pour établir des appels ; et
un circuit de commande (20) agencé pour effectuer des opérations logiques pour coordonner un contenu audiovisuel avec des informations de liste de contacts, comprenant :
des moyens pour enregistrer un message audio et mémoriser le message audio en relation avec le contenu audiovisuel ;
des moyens pour effectuer une reconnaissance vocale sur le message audio pour générer des critères à partir du message audio pour une utilisation lors de la mise en correspondance du message audio avec une entrée de liste de contacts ;
des moyens pour mettre en correspondance le message audio avec une entrée de liste de contacts parmi une pluralité d'entrées de liste de contacts en recherchant, dans les entrées de liste de contacts, une entrée de liste de contacts qui contient un contenu de liste de contacts qui correspond aux critères provenant du message audio ;
des moyens pour associer le contenu audiovisuel avec l'entrée de liste de contacts correspondante ; et
des moyens pour présenter le contenu audiovisuel à un utilisateur du terminal radio mobile (10) lors d'au moins l'une d'une sélection d'utilisateur de l'entrée de liste de contacts correspondante ou d'une réception d'un appel entrant provenant d'un dispositif associé à l'entrée de liste de contacts correspondante.

13. Terminal radio mobile (10) selon la revendication 12, dans lequel le contenu audiovisuel comprend une photographie et la photographie est affichée à la place d'un affichage de l'entrée de liste de contacts lors d'au moins l'une d'une sélection d'utilisateur de l'entrée de liste de contacts correspondante ou d'une réception d'un appel entrant provenant d'un dispositif associé à l'entrée de liste de contacts correspondante.

14. Terminal radio mobile (10) selon l'une ou l'autre des revendications 12 et 13, dans lequel la reconnaissance vocale convertit le message audio en texte.
